# EUROPEAN PATENT APPLICATION

(11) **EP 1 264 855 A1**
(43) Date of publication of application: **11.12.2002**
(21) Application number: 01112959.0
(22) Date of filing: 07.06.2001
(51) Int. Cl.: C08K 9/00, C08K 5/523, C08K 5/00, C08J 3/12

(54) **Particulate flame retardant compositions and their preparation**

(71) Applicant: ALBEMARLE CORPORATION, Baton Rouge, LA 70801-1765 (US)
(72) Inventor: De Schryver, Daniel A., 2820 Bonheiden (BE); Bartolini, Patrizio, 7110 Houdeng-Aimeries (BE)
(74) Representative: UEXKÜLL & STOLBERG

(57) **Abstract**

A particulate flame retardant additive composition is prepared by absorbing a polyphosphate ester into the pores of a porous particulate inorganic substrate to produce a free-flowing particulate composition that contains at least 35-40 wt% of the polyphosphate ester and/or of product(s), if any, formed during such absorption process. Porous particulate silicas are the preferred inorganic substrates.

## Description

### BACKGROUND

Liquid phosphorus-based flame retardants such as polyphosphate esters are generally preferred for use in polyurethane foam type applications. However, for other flame retardant applications use of a particulate flame retardant is desired. Many polymer producers are equipped for, and accustomed to, using flame retardants in particulate form such as powders and granules. Moreover, to efficiently utilize a relatively viscous liquid flame retardant there is the need for a pump capable of heating the flame retardant. While these shortcomings may be circumvented by forming a masterbatch of the liquid phosphorus-containing flame retardant in the polymer to be flame retarded, this necessitates subjecting the flame retardant to a temperature high enough to melt the polymer during the time the flame retardant is being blended with the polymer in forming the masterbatch. Such exposure to an extra heating step at high temperature is not desirable. Furthermore, in some cases it would not be possible to prepare a masterbatch with a desirable high loading of a liquid phosphorus-containing flame retardant because, for example, the polymer may not have the capability of taking up a high enough quantity of such liquid flame retardant, or because the large quantity of the liquid flame retardant may plasticize the masterbatch too much to be able to compound, handle, or granulate it.

It would be very desirable if an economically-attractive way could be found of providing normally liquid polyphosphate ester-type flame retardants in particulate form, especially if this could be accomplished without need for exposing the flame retardant to an extra heating step at high polymer melting temperature.

### THE INVENTION

This invention provides away of providing normally liquid polyphosphate ester-type flame retardants in particulate form, without exposing the flame retardant to an extra heating step at high polymer melting temperature. Moreover, this desirable objective can be accomplished in an economically-attractive manner.

In accordance with one of its embodiments this invention provides a process of preparing a free-flowing particulate flame retardant additive composition from a liquid polyphosphate ester that responds to the formula:

(RO)₂P(=O)O-[Ar-OP(=O)(OR)O]ₙR

where each R is, independently, an aryl or alkyl-substituted aryl group; Ar is an arylene group of 6 to 20 carbon atoms, and n is a number in the range of 1 to 8 with the proviso that if the polyphosphate ester is a mixture in which n is not the same for each component in the mixture, n is an average number which can be a fractional number within said range, which process comprises absorbing said polyphosphate ester into the pores of a porous particulate inorganic substrate to produce a free-flowing particulate composition that contains the polyphosphate ester (and/or of product(s), if any, formed during such absorption process). In cases where the polyphosphate ester is highly viscous at room temperature, the ester can be heated to a suitable modest temperature, *e.g.*, up to about 50°C to about 110°C to reduce its viscosity and thereby facilitate absorption into the substrate.

The amount of the polyphosphate ester (and/or of product(s), if any, formed during the absorption process) should be such that the free-flowing particulate composition contains at least 35 to 40 wt% of such ester and/or of product(s), if any such product(s) are formed. From a cost effectiveness standpoint, the amount of the polyphosphate (and/or of such product(s), if any) is preferably such that the free-flowing particulate composition contains at least 50 wt%, and more preferably at least 60 wt% of the polyphosphate ester (and/or of such product(s), if any are formed).

In the practice of the process of this invention, contact is established between the polyphosphate ester and the porous particulate inorganic substrate, so that the liquid ester can enter the pores or interstices of the substrate and thus load the pores or interstices of the substrate with the ester. The substrate used has pores large enough to allow the liquid ester to enter the pores or interstices, and has a total pore volume large enough to produce a free-flowing particulate composition loaded with enough of the ester to achieve the content described above. Thus the resultant composition contains at least 35-40 wt%, preferably at least 50 wt%, and more preferably at least about 60 wt% of the polyphosphate ester and/or of product(s), if any, formed during such absorption process.

It will be understood that the term "absorb" and "absorbed" are used in their common, ordinary meanings. Thus "absorb" means "to take in through pores or interstices; to soak in or up", and the term "absorbed" is the past tense of absorb. Likewise "absorption" is used in its common, ordinary meaning of "the act or process of absorbing or the condition of being absorbed". In other words, these terms are not being used in any hypertechnical sense to designate what physical or chemical phenomena are taking place when the liquid polyphosphate ester and the porous substrate come into contact with each other. Rather, it is enough that the substrate soaks up or takes up the polyphosphate ester, presumably in its pores, and keeps soaked up or taken up, the polyphosphate ester and/or whatever reaction product(s), if any, that are formed in the absorption process, so that the result is the formation of a free-flowing particulate material that contains at least an amount specified above of the polyphosphate ester and/or of product(s), if any, formed during such absorption process.

Another embodiment of this invention is a free-flowing particulate flame retardant additive composition which comprises a particulate porous inorganic substrate, most preferably silica, having absorbed therein a liquid polyphosphate ester of the formula:

(RO)₂P(=O)O-[Ar-OP(=O)(OR)O]ₙR

where each R is, independently, an aryl or alkyl-substituted aryl group; Ar is an arylene group of 6 to about 20 carbon atoms, and n is a number in the range of 1 to 8 with the proviso that if the polyphosphate ester is a mixture in which n is not the same for each component in the mixture, n is an average number which can be a fractional number within said range, the porous particulate substrate having absorbed at least 35-40 wt%, preferably at least 50 wt%, and more preferably at least 60 wt% of the polyphosphate ester, and containing at least 35-40 wt%, preferably at least 50 wt%, and more preferably at least 60 wt% of the polyphosphate ester and/or of product(s), if any, formed during such absorption. A further embodiment of this invention is the use of such a flame retardant additive composition as a flame retardant in a polymer.

If there are any non-liquid polyphosphate esters that respond to the above general formula and that cannot be converted into a liquid by heating to a temperature of up to about 100°C, they are excluded from the scope of this invention by the use of the term "liquid". It will also be appreciated that this invention is not to be limited to any particular chemical or physical form of the polyphosphate ester once it has been absorbed by the substrate. There is no presently-known evidence to indicate that any chemical reaction or chemical change takes place in the polyphosphate ester during the absorption by the substrate. Nevertheless, in recognition of the fact that the possibility exists, however remote, that something unforeseen and unobserved to date may take place within the minute confines of the pores, this possibility is mentioned herein, and thus there is no requirement that there be no chemical change during the absorption. Likewise the polyphosphate ester may still be a liquid after it has been absorbed, but again this is not a requirement. It is sufficient that polyphosphate ester and/or of reaction product(s) thereof, if any, resulting from contact with the substrate or impurities therein, remain(s) absorbed by the substrate under ordinary ambient room temperature and atmospheric pressure conditions, that the particulate product is free-flowing, and that it can serve as a flame retardant when added in suitable quantity to a polymer being flame retarded, as evidenced, for example, by performance in the standard Underwriters Laboratories UL-94 test procedure as presently constituted. To facilitate the ensuing description, reference to "contain", "contained", or "containing" a specified amount of a polyphosphate ester is to be understood to mean that such amount can be in the chemical form of (a) the ester, (b) the ester plus one or more reaction products, if any, formed *in situ* during or after the absorption, or (c) one or more reaction products, if any, formed *in situ* during or after the absorption.

In the practice of this invention other ingredients, whether liquid or solid, can be included in the free-flowing particulate flame retardant additive compositions. For example, the compositions of this invention can further include one or more other flame retardants, one or more thermal stabilizers, one or more antioxidants, and/or one or more similar additive components that enhance the performance of the composition.

These and other embodiments and features of this invention will be still further apparent from the ensuing description and appended claims.

### FURTHER DETAILED DESCRIPTION

Preferred liquid polyphosphate esters are those in which R in the above formula is phenyl or alkyl-substituted phenyl, such as tolyl, xylyl, ethylphenyl, isopropylphenyl, and mesityl. The R groups may be the same or different, but preferably are at least isomers of the same group (*e.g.*, various tolyl isomers or various xylyl isomers, *etc.*) if not all the same isomer. Most preferably R is a phenyl group. Typical arylene groups, Ar, are such groups as 1,3-phenylene, 1,4-phenylene, 4,4'-biphenylene (*i.e.*, -C₆H₄-C₆H₄-), methylenebis(4,4'-diphenylene) (*i.e.*, -C₆H₄-CH₂-C₆H₄-), isopropylidenebis(4,4'-diphenylene) (*i.e.*, -C₆H₄-CMe₂-C₆H₄-), sulfonebis(4,4'-diphenylene) (i.e., -C₆H₄-S(=O)₂-C₆H₄-), and similar divalent aromatic hydrocarbyl groups. A preferred polyphosphate ester is bisphenol-A bis(diphenylphosphate). Another preferred polyphosphate ester is resorcinolbis(diphenyl phosphate). These products can be the monomeric form of the specified polyphosphate ester (*i.e.,* n in the above formula is 1), or (b) an oligomeric form of the specified polyphosphate ester which may or may not contain the monomeric form of the specified polyphosphate ester and which may be a single oligomer (*i.e.*, n of the above formula is the same for each molecule in the product), but which more often is a mixture of oligomers (*i.e.*, n of the above formula is not the same number for each molecule of the product). Therefore in case (b), is an average value for the overall product and is greater than 1 but less than about 8. Often these products contain a small amount of triphenylphosphate which can be regarded as an impurity in which n of the above formula is, of course, zero. Such products are regarded in the art as being closely related compositions which have sufficient similarities to be identified by the same chemical name. For example, Akzo Nobel N.V. offers several polyphosphate ester products under the trademark Fyrolflex. One of these is Fyrolflex RDP with a stated phosphorus content of 10.9-11.0 wt%, and another is Fyrolflex RDP-B with a stated phosphorus content of 10.6 wt%. In addition, these products have different specified viscosities, and pour points. Yet both are identified as "resorcinolbis(diphenyl phosphate)". In other words the chemical name is the same, thus signifying a close relationship between or among the products. Similar considerations apply in or among such commercial products as Reophos RDP (Great Lakes Chemical Corporation) and CR733 (Daihatchi Chemical Industry Co. Ltd.); and in or among such products as Fyrolflex BDP (Akzo Nobel N.V.), Reophos BDP (Great Lakes Chemical Corporation), CR741 (Daihatchi Chemical Industry Co. Ltd.), and CR741S (Daihatchi Chemical Industry Co. Ltd.).

One group of preferred compounds of the above formula are those in which n of the above formula is a number in the range of 1 to 2.

Porous inorganic substrates that may be used in the practice of this invention include, among others, porous particulate forms of silica, alumina, silica-alumina, natural zeolites, and synthetic zeolites. The substrate should be anhydrous, and thus substrates that contain water should be calcined to remove the water before use. As noted above, the most preferred substrate for use in this invention is porous silica.

Various suitable porous substrates are available in the marketplace, for example as spray-dried products or as calcined products. Typically, the particulate substrate used has a pore volume in the range of 1 to 2.5 milliliters per gram, and an average pore diameter in the range of 1 to 1000 nanometers. Preferred substrates are those in which the pore volume is in the range of 1.4 to 2.2 milliliters per gram, and the average pore diameter is in the range of 10 to 100 nanometers.

As to other characteristics of the porous substrates such as the silicas, typically the particulate substrate used will have an average particle size in the range of 0.5 to 1000 microns, a surface area in the range of 50 to 1000 m²/g, an average pore diameter in the range of 1 to 1000 nanometers, and a density in the range of 0.03 to 1 g/mL. Preferably the average particle size is in the range of 1 to 100 microns, the surface area is in the range of 100 to 500 m²/g, the average pore diameter is in the range of 10 to 100 nanometers, and the density is in the range of 0.05 to 0.5 g/mL.

The characteristics of the substrate used can depend on the properties of the polyphosphate ester being used, and the type of polymer in which the product is to be used. Thus, departures from the above ranges are permissible and within the scope of this invention whenever deemed necessary or desirable in any given situation, provided that the product formed from the particulate substrate used is free-flowing, contains at least 35-40 wt%, preferably at least 50 wt%, and more preferably at least 60 wt% of absorbed polyphosphate ester, and serves the function as a flame retardant, as evidenced for example, by performance in the standard Underwriters Laboratories UL-94 test procedure as presently constituted, *i.e.,* on the filing date hereof.

As noted above, the free-flowing particulate flame retardant compositions of this invention contain at least 35-40 wt%, preferably at least 50 wt%, and more preferably at least 60 wt% of polyphosphate ester. Generally speaking the higher the amount of polyphosphate ester contained by the porous particulate substrate, the better. Thus products containing at least 70 wt% of polyphosphate ester are especially preferred.

To produce the free-flowing particulate flame retardant compositions of this invention, the polyphosphate ester or mixture of polyphosphate esters being used and the porous particulate substrate are brought together in quantities sufficient for the absorption to take place and produce a product containing the amount of polyphosphate ester to be present. Usually, and preferably, the particulate substrate is introduced into the liquid polyphosphate ester and the mixture is gently agitated to ensure thorough contact between these materials. Heat can be applied before and/or during the mixing, especially when using a highly viscous polyphosphate ester. Temperatures of up to 110°C can be used for this purpose. Even higher temperatures can be used, but this is not recommended except where necessary. Time periods for the absorption process can vary depending upon the porosity characteristics of the substrate and the viscosity of the polyphosphate ester being used. Usually periods in the range of 30 seconds to 5 minutes will suffice, but this is not a critical aspect of the operation. The operation is normally conducted at atmospheric pressure but can be conducted under reduced or increased pressure conditions if desired.

The free-flowing particulate flame retardant additive compositions of this invention can be used in any polymer to impart flame retardant properties thereto. All that is involved is to blend an effective flame retardant quantity of a free-flowing particulate flame retardant additive composition of this invention with a substrate polymer. Non-limiting examples of polymers in which the additive compositions of this invention can be used include, among others, polyolefin polymers and copolymers, styrenic polymers, polyurethanes, polyesters, polyamides, polycarbonates, polyphenylene ethers, polysulfones, styrene-acrylonitrile polymers, acrylonitrile-butadiene-styrene polymers, and polymer blends such as polyphenylene ether-styrene blends, and aromatic polycarbonate-ABS blends. Without being bound by theory, it is envisioned that an advantage of such use is that upon exposure to combustion temperatures the polyphosphate ester can be expelled in plug-like fashion in various directions from the pores of the substrate to thereby effectively flame retard the polymeric substrate. Such expulsion is made possible by the non-flammability and physical integrity of the porous particulate inorganic substrate even when exposed to such combustion temperatures.

The practice of this invention is illustrated, but not limited, by the following examples.

### EXAMPLE 1

In this operation the materials used were 16.25 g of NcendX™ P-30 flame retardant, a polyphosphate ester of the above formula available commercially from Albemarle Corporation, and 8.75 g of a porous silica obtained from Crossfield Limited under the designation silica C500. The polyphosphate ester is proprietary product in the form of a colorless liquid having the following typical properties: 8.9 wt% phosphorus; specific gravity of 1.26 and a viscosity of 17,000 centipoise at 25 °C. The silica is a granular product that has been calcined for 5 hours at 200°C. It has a pore volume of 146 mL/g; a surface area of 143 m²/g; an average pore diameter of 46.7 nm; a total volatiles content of 43%; a density of 0.25 g/mL; and a particle size distribution (Malvern) of D90% at 165.9 microns, D50% at 111.5 microns, and D10% at 54.2 microns. It has a Na₂O content of 541 ppm, a Ca content of 412 ppm, and a Mg content of 36 ppm.

NcendX™ P-30 flame retardant was heated to 100°C (to reduce its viscosity) in a glass beaker. The silica was slowly added to the beaker containing the heated flame retardant under continuous mixing with a spatula. The result was the formation of a nicely free-flowing dryblend. This particulate product contained 65 wt% of the polyphosphate ester flame retardant. Such dryblends have been made in this manner in small quantities (approximately 25 grams) as well as in larger quantities.

### EXAMPLE 2

The same procedure as in Example 1 was used except that in this case 16.25 g of NcendX™ P-30 flame retardant and 8.75 g of a spray dried particulate silica obtained from Crossfield Limited under the designation ES70X were used. This silica has a pore volume of 1.67 mL/g; a surface area of 289 m²/g; an average pore diameter of 24 nm; a volatiles content of 60%; a Na₂O content of 440 ppm; and a particle size distribution (Malvern) of D90% at 71.9 microns, D50% at 35.2 microns, and D10% at 11.2 microns. The product was a free-flowing particulate product containing 65 wt% of the polyphosphate ester.

### EXAMPLE 3

The procedure of Example 2 was repeated using 17.5 grams of the NcendX™ P-30 flame retardant and 7.5 grams of silica. The product was a free-flowing particulate product containing 70 wt% of the polyphosphate ester.

### EXAMPLE 4

In this case 16.25 g of NcendX™ P-30 flame retardant and 8.75 g of a spray dried particulate silica obtained from Crossfield Limited under the designation Gasil 23D were used. This silica has a pore volume of 1.6 mL/g; a surface area of 290 m²/g; an average particle size of 4.6 microns; a density of 0.105; a Na₂O content of 656 ppm; an Fe content 31 ppm, and an MgO content of 68 ppm. Using the same procedure as in Example 1, the product formed was a free-flowing particulate product containing 65 wt% of the polyphosphate ester.

### EXAMPLE 5

The procedure of Example 4 was repeated using 7.5 grams of NcendX™ P-30 flame retardant and 17.5 grams of the silica from Example 4. The product was a free-flowing particulate product containing 70 wt% of the polyphosphate ester.

When it is desired to incorporate one or more additional components, e.g., other flame retardant(s), antioxidant(s), and/or thermal stabilizer(s), into the final product the other components can be mixed with the polyphosphate flame retardant so that the mixture is taken up by the porous substrate. Alternatively, the other component or components, either as such or in the form of one or more solutions or slurries may be taken up into a substrate that has already taken up the polyphosphate flame retardant. Still another alternative is to take up the other component or components either as such or in the form of one or more solutions or slurries, and then cause the polyphosphate flame retardant to be taken up into the so-treated substrate.

Another way of utilizing the compositions of this invention is to simply form the composition composed of the porous substrate containing the absorbed polyphosphate ester, and mix this composition with one or more other particulate or powdery components as a dryblend. If one or more liquid components are to be used in combination with the composition composed of the porous substrate containing the absorbed polyphosphate ester, the liquid component(s) can be absorbed into a porous substrate separately from the porous substrate containing the absorbed polyphosphate ester, and the resultant substrates with their respective contents can be mixed together to form a suitably uniform mixture of particles having at least two different contents absorbed therein.

Any of a wide variety of other common polymer additives can be used either (i) as components that are absorbed into, or sprayed or otherwise coated and solidified on the exterior of, the porous substrate or (ii) as additives that are blended into the polymer being molded along with a composition of this invention. Non-limiting examples of the types of additives that can be utilized in this manner include other flame retardants, antioxidants (*e.g.*, phenolic antioxidants, especially sterically-hindered phenolic antioxidants, secondary antioxidants such as organic phosphites orphosphonites), extrusion aids (*e.g.*, barium stearate or calcium stearate), acid scavengers (*e.g.*, magnesium oxide or tetrasodium pyrophosphate), dyes, pigments, fillers, thermal stabilizers, UV absorbers and light stabilizers, nucleating agents (e.g., inorganic substances such as hydrotalcites, talc, metal oxides, alkaline earth phosphates, carbonates or sulfates, organic substances such as mono- or polycarboxylic acids or salts thereof), polymer clarifying agents, antistatic agents, reinforcing agents, metal passivators, plasticizers, blowing agents, and other additives for improving the processability or performance properties of the finished polymer. The particular materials selected for use should not materially affect adversely the properties of the finished polymer composition for its intended utility.

When employing in a composition of this invention one or more such additional additives that improve the processability or a performance characteristic of a polymer, it is preferred that such additional additive(s) be absorbed into the pores of the porous substrate along with the absorbed polyphosphate ester, and/or that such such additional additive(s) be bonded on the exterior surface of the composition.

Various known procedures can be used to prepare the blends or formulations used in forming the molded polymer. For example a flame retardant composition of this invention such as illustrated in the above Examples can be blended with such other components, including the dry polymer resin, and thereafter the blend can be molded by extrusion, compression, or injection molding. Likewise the components can be mixed together in a Banbury mixer, a Brabender mixer, a roll mill, a kneader, or other similar mixing device, and then formed into the desired form or configuration such as by extrusion followed by comminution into granules or pellets, or by other known methods. Alternatively the flame retardant composition of this invention can be separately dry mixed with the polymer apart from any other additive(s) and thereafter the final dry blend, including other additive(s) if used, can be molded or extruded. Similarly, the flame retardant composition of this invention can be separately introduced into and mixed with the polymer in its molten condition, before and/or after the inclusion in the polymer of any other additive(s).

The compositions of this invention can be utilized in the formation of useful articles of the type normally fabricated by molding or extrusion of conventional flame retarded polymers. Likewise it is possible to prepare foamed or expanded shapes and objects from the compositions of this invention. Molding and extrusion conditions such as temperatures and pressures are within conventional recommended limits. Conditions normally used for producing foamed or expanded shapes and objects from flame retarded polymers can be used with the compositions of this invention, with little or no modification.

## Claims

1. A process of preparing a free-flowing particulate flame retardant additive composition from a liquid polyphosphate ester that responds to the formula:
(RO)₂P(=O)O-[Ar-OP(=O)(OR)O]ₙR
where each R is, independently, an aryl or alkyl-substituted aryl group; Ar is an arylene group of 6 to 20 carbon atoms, and n is a number in the range of 1 to 8 with the proviso that if the polyphosphate ester is a mixture in which n is not the same for each component in the mixture, n is an average number which can be a fractional number within said range, which process comprises absorbing said polyphosphate ester into the pores of a porous particulate inorganic substrate to produce a free-flowing particulate composition that contains at least 35-40 wt% of the polyphosphate ester and/or of product(s), if any, formed during such absorption process.

2. A process of Claim 1 wherein the free-flowing particulate composition contains at least 50 wt% of said liquid polyphosphate ester.

3. A process of Claim 1 wherein the free-flowing particulate composition contains at least 60 wt% of said liquid polyphosphate ester.

4. A process of any of Claims 1-3 wherein Ar in the formula is a bivalent group of the formula -C₆H₄C(CH₃)₂C₆H₄- where the depicted bonds are in the 4 and 4' positions.

5. A process of Claim 4 wherein the liquid polyphosphate ester is a bisphenol-A bis(diphenyl phosphate) in which n is in the range of 1 to 2.

6. A process of any of Claims 1-5 wherein the particulate inorganic substrate has a pore volume in the range of 1 to 2.5 milliliters per gram, and an average pore diameter in the range of 1 to 1000 nanometers.

7. A process of Claim 6 wherein said pore volume is in the range of 1.4 to 2.2 milliliters per gram, and said average pore diameter is in the range of 10 to 100 nanometers.

8. A process of Claims 6 or 7 wherein said particulate inorganic substrate has an average particle size in the range of 0.5 to 1000 microns, a surface area in the range of 50 to 1000 m²/g, and a density in the range of 0.03 to 1 g/mL.

9. A process of Claim 8 wherein said average particle size is in the range of 1 to 100 microns, said surface area is in the range of 100 to 500 m²/g, and said density is in the range of 0.05 to 0.5 g/mL.

10. A process of any of Claims 1-9 wherein said particulate inorganic substrate is porous particulate silica.

11. A free-flowing particulate flame retardant additive composition which comprises a particulate porous inorganic substrate having absorbed therein a liquid polyphosphate ester that responds to the formula:
(RO)₂P(=O)O-[Ar-OP(=O)(OR)O]ₙR
where each R is, independently, an aryl or alkyl-substituted aryl group; Ar is an arylene group of 6 to about 20 carbon atoms, and n is a number in the range of 1 to 8 with the proviso that if the polyphosphate ester is a mixture in which n is not the same for each component in the mixture, n is an average number which can be a fractional number within said range, the porous particulate substrate having absorbed at least 35-40 wt% of the polyphosphate ester, and containing at least 35-40 wt% of the polyphosphate ester and/or of product(s), if any, formed during such absorption.

12. A composition of Claim 11 wherein the free-flowing particulate composition contains at least 50 wt% of said liquid polyphosphate ester.

13. A composition of Claim 11 wherein the free-flowing particulate composition contains at least 60 wt% of said liquid polyphosphate ester.

14. A composition of any of Claims 11-13 wherein Ar in the formula is a bivalent group of the formula -C₆H₄C(CH₃)₂C₆H₄- where the depicted bonds are in the 4 and 4' positions.

15. A composition of Claim 14 wherein the liquid polyphosphate ester is a bisphenol-A bis(diphenyl phosphate) in which n is in the range of 1 to 2.

16. A composition of any of Claims 12-15 wherein the particulate substrate has a pore volume in the range of 1 to 2.5 milliliters per gram, and an average pore diameter in the range of 1 to 1000 nanometers.

17. A composition of Claim 16 wherein said pore volume is in the range of 1.4 to 2.2 milliliters per gram, and said average pore diameter is in the range of 10 to 100 nanometers.

18. A composition of Claims 16 or 17 wherein said particulate inorganic substrate has an average particle size in the range of 0.5 to 1000 microns, a surface area in the range of 50 to 1000 m²/g, and a density in the range of 0.03 to 1 g/mL.

19. A composition of Claim 18 wherein said average particle size is in the range of 1 to 100 microns, said surface area is in the range of 100 to 500 m²/g, and said density is in the range of 0.05 to 0.5 g/mL.

20. A composition of any of Claims 11-19 wherein said particulate inorganic substrate is porous particulate silica.

21. A composition of any of Claims 11-20 wherein said composition further includes in the pores thereof and/or bonded on the exterior surface thereof at least one additional additive that improves the processability or a performance characteristic of a polymer.

22. The use as a flame retardant in a polymer of a composition of any of Claims 11-21.

23. A free-flowing particulate flame retardant additive composition produced according to any of Claims 1-10.
